# EUROPÄISCHE PATENTSCHRIFT

(11) **EP 3 344 887 B1**
(45) Veröffentlichungstag und Bekanntmachung des Hinweises auf die Patenterteilung: **19.06.2019**
(21) Anmeldenummer: 16753928.7
(22) Anmeldetag: 19.08.2016
(51) Int. Cl.: F16D 51/20, F16D 65/08, F16D 65/10, F16D 69/04

(54) **TROMMELBREMSE UND BREMSBACKE**
DRUM BRAKE AND BRAKE SHOE
FREIN À TAMBOUR ET MÂCHOIRE DE FREIN

(30) Priorität: 01.09.2015 DE 102015114551
(43) Veröffentlichungstag der Anmeldung: 11.07.2018
(73) Patentinhaber: SAF-HOLLAND GmbH, 63856 Bessenbach (DE)
(72) Erfinder: ARPACI, Muhammet, 63741 Aschaffenburg (DE); WEBER, Elmar, 48249 Dülmen (DE); STEGMANN, Rainer, 63768 Hösbach (DE)
(74) Vertreter: Müller Schupfner & Partner Patent- und Rechtsanwaltspartnerschaft mbB
(86) Internationale Anmeldenummer: PCT/EP2016/069729
(87) Internationale Veröffentlichungsnummer: WO 2017/036825

(56) Entgegenhaltungen:
- EP-A1- 1 752 673
- CN-U- 203 161 903
- US-A- 2 113 608
- US-A- 2 126 945
- US-A- 3 467 229

## Beschreibung

Die vorliegende Erfindung betrifft eine Trommelbremse sowie eine Bremsbacke einer Trommelbremse, beides insbesondere für Nutzfahrzeuge, wie LKW, Sattelauflieger, Anhänger oder dergleichen.

Trommelbremsen der in Rede stehenden Art sind hinlänglich aus dem Stand der Technik bekannt. Hierbei ist eine Bremstrommel vorgesehen, in deren Innenraum zwei Bremsbacken schwenkbar gelagert sind und über eine Nockenrolle sowie eine Nockenwelle die Bremsbacken an die innere Umfangsfläche der Bremstrommel gedrückt werden. Problematisch bei derartigen Trommelbremsen ist jedoch, dass sich bei Betätigung der Trommelbremse der offene Bereich der Bremstrommel, welcher nicht den Anbindungsbereich zur Montage an der Radnabe aufweist, aufgrund thermischen Einflusses ausdehnt, so dass die Bremsbeläge nicht mehr vollflächig an der Bremstrommel zur Anlage gelangen.

Die US-2,113,608, US-2,126,945 und US-3,467,229 zeigen Trommelbremsen mit einer Bremstrommel mit einem Anbindungsbereich zur Anordnung der Bremstrommel an einem Fahrzeug sowie einer Bremsbacke, welche mit der Bremstrommel in Eingriff gebracht werden kann.

Die CN 203 1061 903 U und die EP 1 752 673 A1 zeigen Trommelbremsen, bei welchen eine Bremsbacke von außen an den Mantel einer Bremstrommel angelegt wird.

Die US-2,020,578 zeigt eine Trommelbremse, welche eine Bremstrommel aufweist, innerhalb welcher zwei Bremsbacken angeordnet sind, um eine Relativ-Rotation derselben durch Anlage der Bremsbacken am Innenumfang der Bremstrommel zu verringern bzw. zu verhindern.

Es ist daher Aufgabe der vorliegenden Erfindung, eine Trommelbremse und eine Bremsbacke einer Trommelbremse, insbesondere für Nutzfahrzeuge, vorzusehen, welche in allen Betriebszuständen eine hohe Betriebssicherheit, insbesondere durch vollflächiges Anliegen der Bremsbeläge an der Bremstrommel, gewährleisten.

Diese Aufgabe wird durch eine Trommelbremse, insbesondere für Nutzfahrzeuge, mit den Merkmalen des Anspruchs 1 und durch eine Bremsbacke einer Trommelbremse, insbesondere für Nutzfahrzeuge, mit den Merkmalen des Anspruchs 11 gelöst. Bevorzugte Ausführungsformen sind Gegenstand der abhängigen Ansprüche.

Erfindungsgemäß ist eine Trommelbremse, insbesondere für Nutzfahrzeuge, vorgesehen, umfassend eine Bremstrommel mit einem Anbindungsbereich zur Anordnung der Bremstrommel an einem Fahrzeugteil, wie einer Radnabe, und einem Mantelbereich mit einer ersten Kontaktfläche, und einen Reibbelag mit einer zum Mantelbereich hingewandten zweiten Kontaktfläche, wobei die erste und zweite Kontaktfläche entlang bzw. in einer Radialebene gekrümmt sind. Die Bremstrommel ist somit insbesondere durch zwei Bereiche, nämlich den Anbindungsbereich und den Mantelbereich, konstituiert. Der Anbindungsbereich dient zur Befestigung bzw. Anordnung bzw. Montage der Bremstrommel an einem Fahrzeugteil, welches als Radnabe oder Fahrzeugachse ausgebildet sein kann. Hierfür erstreckt sich der Anbindungsbereich von dem Mantelbereich mit einer radialen Komponente zur Rotationsachse hin und weist entsprechende Anschluss- bzw. Befestigungsbereiche zur Montage an dem Fahrzeugteil auf. Vorzugsweise an dem äußeren Umfang des Anbindungsbereichs erstreckt sich in axialer Richtung, d.h. in einer Richtung parallel zur Rotationsachse der Trommelbremse, ein Mantelbereich. Der Mantelbereich ist folglich zweckmäßigerweise in Form eines Zylinders mit kreisringförmigen Querschnitt ausgebildet. Am Innenumfang des Mantelbereichs ist eine erste Kontaktfäche ausgebildet, die sich somit gleichfalls im wesentlichen umfänglich um die Rotationsachse erstreckt. Weiterhin ist ein Reibbelag vorgesehen, an dessen äußerem Umfang eine zweite Kontaktfläche vorgesehen ist, welche im zusammengebauten Zustand der Trommelbremse zum Mantelbereich, insbesondere dessen erster Kontaktfläche, zugewandt ist. Der Reibbelag ist hierbei an der ersten Kontaktfläche angeordnet oder anordenbar. In anderen Worten kann der Reibbelag somit mit der ersten Kontaktfläche kontaktiert bzw. in Berührung gebracht werden. Auch ist es möglich, dass der Reibbelag, insbesondere dessen zweite Kontaktfläche, mit dem Mantelbereich, insbesondere dessen erster Kontaktfläche, in Eingriff gebracht werden kann. Von besonderem Vorteil ist es, dass die erste und zweite Kontaktfläche entlang bzw. in einer Radialebene gekrümmt sind. Die Radialebene wird durch die Rotationsachse sowie einen senkrecht hierzu stehenden Radius aufgespannt. Die Radialebene schneidet somit Bremstrommel und Reibbelag, so dass in dieser Radialebene gesehen die erste und zweite Kontaktfläche jeweils gekrümmt sind. Die Krümmung ist zweckmäßigerweise kreisförmig bzw. gebogen bzw. kurvenförmig, nicht jedoch eckig. Hierdurch ist es besonders vorteilhafterweise möglich, dass, unabhängig von der axialen Position von Bremstrommel und Reibbelag zueinander, die erste und zweite Kontaktfläche vollflächig kontaktieren bzw. vollflächig in Kontakt gebracht werden können.

Zweckmäßigerweise sind die Bremstrommel und der Reibbelag als separate Elemente bzw. Teile bzw. mehrteilig ausgebildet.

Erfindungsgemäß sind der Reibbelag und der Mantelbereich zueinander axial verlagerbar. In anderen Worten können Reibbelag und Mantelbereich derart zueinander verlagert werden, dass die Verlagerung zumindest mit einer Komponente in Axialrichtung bzw. in Richtung der Rotationsachse erfolgt. Die Verlagerung erfolgt insbesondere, indem eine Gleitbewegung der ersten und zweiten Kontaktfläche zueinander vorgesehen wird. Hierbei erfolgt die Verlagerung mit einer Komponente zumindest in Axialrichtung derart, dass die Bewegung bzw. Verlagerung der Krümmung der ersten und zweiten Kontaktfläche folgt. In anderen Worten ist es somit möglich, die Position von Bremstrommel zum Reibbelag in zumindest zwei verschiedenen Zuständen bzw. Positionen aufgrund der Verlagerbarkeit zwischen Reibbelag und Mantelbereich vorzusehen. Dies ist besonders vorteilhaft bei einer Betätigung der Trommelbremse, da sich der freie Bereich der Bremstrommel in seinem Durchmesser vergrößert (aufpilzt bzw. konisch wird) und somit eine Relativbewegung zwischen Reibbelag und Mantelbereich die Folge ist.

Vorzugsweise ist eine der Kontaktfächen konkav und die andere der Kontaktflächen konvex ausgebildet. In anderen Worten ist somit entweder die erste oder die zweite Kontaktfläche entlang bzw. in der Radialebene konkav ausgebildet. Analog hierzu ist die andere der Kontaktflächen entsprechend konvex ausgebildet.

Von besonderem Vorteil ist es, wenn die Krümmungen der ersten und zweiten Kontaktflächen kongruent zueinander ausgebildet sind. Insbesondere können somit die erste Kontaktfäche und die zweite Kontaktfläche im wesentlichen den gleichen Krümmungsradius aufweisen. "Im wesentlichen den gleichen Krümmungsradius" bedeutet, dass das Verhältnis des Krümmungsradius der ersten Kontaktfläche zum Krümmungsradius der zweiten Kontaktfläche zwischen 0,95 und 1,05, insbesondere zwischen 0,98 und 1,02, liegt. Hierdurch wird gewährleistet, dass die erste und zweite Kontaktfläche flächig zueinander zur Anlage bringbar sind.

Vorteilhafterweise sind die Krümmungsradien der ersten und zweiten Kontaktflächen entlang der Radialebene größer als entlang der Schwenkebene. Die Schwenkebene steht senkrecht zur Rotationsachse der Trommelbremse und somit parallel zu einem Radius der Rotationsachse. Infolgedessen bilden die erste und zweite Kontaktfläche somit in einer speziellen Ausführungsform die Konfiguration der Mantelfläche einer Tonne aus.

Vorzugsweise liegt das Verhältnis der Krümmungsradien der ersten und/oder zweiten Kontaktflächen entlang der Schwenkebene zu den Krümmungsradien der ersten und/oder zweiten Kontaktflächen entlang der Radialebene zwischen 0,01 bis 0,08, vorzugsweise zwischen 0,02 bis 0,06. Insbesondere durch ein Verhältnis zwischen 0,02 bis 0,06 wird eine optimale Verlagerbarkeit zwischen Reibbelag und Bremstrommel bei optimaler Kraftübertragung während des Bremsens ermöglicht.

Zweckmäßigerweise sind die Krümmungsradien der ersten und zweiten Kontaktflächen entlang der Radialebene und/oder der Schwenkebene konstant. In anderen Worten weist somit die Schnittlinie bzw. -kurve der ersten und zweiten Kontaktflächen mit einer Radialebene, auf welcher die Rotationsachse liegt, und/oder der Schwenkebene, die senkrecht zur Rotationsachse steht, einen konstanten Krümmungsradius auf, so dass diese Schnittllinie im wesentlichen kreisbogenförmig ist. Insbesondere durch einen konstanten Krümmungsradius entlang bzw. in der Radialebene wird eine besonders gleichmäßige Winkelversatzkompensation des Reibbelags gewährleistet.

In einer bevorzugten Ausführungsform steht die Reibbelag derart mit der Bremstrommel in Eingriff, dass eine Verlagerung des Reibbelags zum Mantelbereich in Umfangsrichtung verhindert ist. Die Umfangsrichtung erstreckt sich somit umfänglich um die Rotationsachse. In anderen Worten ist bzw. wird eine Rotation des Reibbelags aufgrund des Eingriffs mit der Bremstrommel um die Rotationsachse der Trommelbremse verhindert. Der Eingriff zwischen Reibbelag und Bremstrommel erfolgt hierbei insbesondere formschlüssig.

Bevorzugt ist an der ersten Kontaktfläche des Mantelbereichs ein erster Eingriffsbereich und an der zweiten Kontaktfläche des Reibbelags ein zweiter Eingriffsbereich vorgesehen, wobei vorzugsweise einer der Eingriffsbereiche als Rücksprung und der andere der Eingriffsbereiche als Vorsprung ausgebildet ist. Es versteht sich, dass vorteilhafterweise eine Vielzahl von über den Umfang verteilten ersten und zweiten Eingriffsbereichen vorgesehen sein kann. Von besonderem Vorteil ist, wenn die Eingriffsbereiche gleichmäßig über den Umfang der ersten bzw. zweiten Kontaktfläche verteilt sind. Die Erstreckungsrichtung der Eingriffsbereiche ist vorzugsweise derart, dass sie sich insbesondere radial und/oder axial, d.h. parallel zur Rotationsachse, erstrecken. Von besonderem Vorteil ist es, wenn die Eingriffsbereiche als Vor- und Rücksprung ausgebildet sind, welche zweckmäßigerweise zueinander kongruent gestaltet sind. Zusätzlich oder alternativ ist es möglich, ein separates bzw. eine Vielzahl von separaten Eingriffsmitteln vorzusehen, welche zwischen dem ersten und dem zweiten Eingriffsbereich wirken. Der Eingriff zwischen Bremstrommel und Reibbelag dient somit quasi einer Rotationssicherung zwischen Bremstrommel und Bremsbelag um die Rotationsachse.

Zweckmäßigerweise ist der Reibbelag als umfänglich geschlossener Ring ausgebildet. In anderen Worten bildet der Reibbelag somit einen sich umfänglich um die Rotationsachse erstreckenden ringförmigen Körper aus.

Alternativ kann der Reibbelag als Ringsegment ausgebildet sein. Das Ringsegment erstreckt sich somit vorteilhafterweise umfänglich um die Rotationsachse der Trommelbremse. Besonders vorteilhafterweise weist die Trommelbremse ein Paar Ringsegmente auf, welche im wesentlichen bezogen auf die Rotationsachse gegenüberliegend zueinander angeordnet sind. In weiteren vorteilhaften Ausführungsform ist eine Vielzahl von Ringsegmenten vorgesehen, welche zweckmäßigerweise am Innenumfang des Mantelbereichs angeordnet sind.

Bevorzugt ist eine Spanneinrichtung vorgesehen, welche ausgelegt ist, den als Ringsegment ausgebildeten Reibbelag, vorzugsweise eine Vielzahl von Ringsegmenten, gegen die erste Kontaktfläche des Mantelbereichs zu drücken bzw. drängen bzw. zwängen. Die Spanneinrichtung kann durch eines oder eine Vielzahl von Spannelementen ausgebildet sein. Hierfür ist bevorzugt an jedem axialen Ende des Reibbelags, d.h. an dem dem Anbindungsbereich zugewandten und dem dem Anbindungsbereich abgewandten Ende des Reibbelags, eine Spanneinrichtung angeordnet. Die Spanneinrichtung bzw. die Spannelemente erstrecken sich hierbei umfänglich und sind zweckmäßigerweise als Ringe bzw. Spannringe ausgebildet.

Vorzugsweise ist eine der zweiten Kontaktfläche gegenüberliegende Fläche des Reibbelags als Reibfläche ausgebildet. Die Reibfläche ist vorzugsweise entlang bzw. in der Schwenkebene um die Rotationsachse der Trommelbremse gekrümmt ausgebildet. In der Radialebene gesehen ist die Reibfläche jedoch vorteilhafterweise gerade, d.h. krümmungslos ausgebildet, d. h. erstreckt sich in Axialrichtung krümmungslos.

In einer weiter bevorzugten Ausführungsform weist die Trommelbremse eine zu der Bremstrommel verlagerbare Bremsbacke auf, wobei der Reibbelag über eine Verbindungsfläche an einer Anordnungsfläche eines Belagträgers der Bremsbacke festgelegt oder festlegbar ist. Die Bremsbacke ist zur Bremstrommel insbesondere derart verlagerbar, dass diese zur Betätigung der Trommelbremse in und außer Eingriff mit der Bremstrommel gebracht werden kann. Hierfür ist die Bremsbacke schwenkbar an einem Bremsträger gelagert. Die Anordnungsfläche der Bremsbacke ist vorteilhafterweise entlang bzw. in der Schwenkebene um die Rotationsachse der Trommelbremse gekrümmt ausgebildet. In der Radialebene ist die Anordnungsfläche zweckmäßigerweise gerade, d.h. krümmungslos ausgebildet, d. h. erstreckt sich in Axialrichtung krümmungslos. In anderen Worten bildet die Anordnungsfläche die Mantelfläche eines Zylinders aus. Der Reibbelag ist an der Anordnungsfläche des Belagträgers derart festgelegt oder festlegbar, dass eine Relativbewegung zwischen Reibbelag und Belagträger nicht stattfinden kann.

Vorzugsweise sind die erste Kontaktfläche als Reibfläche des Mantelbereichs und die zweite Kontaktfäche als Reibfläche des Reibbelags ausgebildet. Die Reibflächen dienen somit zum Abbau der aufgrund der Rotation der Bremstrommel zur Bremsbacke auftretenden Kräfte in Reibungs- und Wärmeenergie. In anderen Worten bilden die erste Kontaktfläche und die zweite Kontaktfläche somit eine Reibpaarung aus.

Zweckmäßigerweise ist die Bremsbacke zur Rotationsachse schwenkbar gelagert. Hierfür ist ein Bremsträger vorgesehen, der eine Lagerung für die Bremsbacke bildet. Die Bremsbacke ist zu dem Bremsträger schwenkbar bzw. kippbar, so dass deren Winkel in der Schwenkebene gesehen zum Betätigen der Trommelbremse veränderbar ist. Besonders vorteilhafterweise ist die Bremsbacke auch in der Radialebene schwenk- bzw. kippbar, so dass der Winkel zur Rotationsachse veränderbar ist.

Weiterhin erfindungsgemäß ist eine Bremsbacke einer Trommelbremse, insbesondere für Nutzfahrzeuge, vorgesehen, umfassend einen Belagträger mit einer Anordnungsfläche, die entlang bzw. in einer Schwenkebene um eine Rotationsachse der Trommelbremse gekrümmt ist, einen Reibbelag, der an der Anordnungsfläche angeordnet oder anordenbar ist, wobei der Reibbelag eine der Anordnungsfläche gegenüberliegende Reibfläche aufweist, die entlang bzw. in einer Radialebene gekrümmt ist. Die Reibfläche des Reibbelags kann insbesondere sämtliche der vorstehend mit Bezug auf die erfindungsgemäße Trommelbremse beschriebenen Merkmale und Funktionen der zweiten Kontaktfläche aufweisen. Die Bremsbacke ist derart ausgebildet, dass dieses Mittel zur Verlagerung gegenüber der Bremstrommel aufweist, so dass diese zur Betätigung der Trommelbremse in und außer Eingriff mit der Bremstrommel gebracht werden kann. Hierfür weist die Bremsbacke einen Lagerungsbereich auf, über welchen diese schwenkbar an einem Bremsträger gelagert werden kann. Die Anordnungsfläche der Bremsbacke ist vorteilhafterweise entlang bzw. in der Schwenkebene um die Rotationsachse der Trommelbremse gekrümmt ausgebildet. In der Radialebene ist die Anordnungsfläche zweckmäßigerweise gerade, d.h. krümmungslos ausgebildet, d. h. erstreckt sich in Axialrichtung krümmungslos. In anderen Worten bildet die Anordnungsfläche die Mantelfläche eines Zylinders aus. Der Reibbelag ist an der Anordnungsfläche des Belagträgers derart festgelegt oder festlegbar, dass eine Relativbewegung zwischen Reibbelag und Belagträger nicht stattfinden kann. Von besonderem Vorteil ist es, dass die Reibfläche entlang bzw. in einer Radialebene gekrümmt ist. Die Radialebene wird durch die Rotationsachse sowie einen senkrecht hierzu stehenden Radius aufgespannt. Die Radialebene schneidet somit Bremstrommel und Reibbelag, so dass in dieser Radialebene gesehen die Reibfläche gekrümmt ist. Die Krümmung ist zweckmäßigerweise kreisförmig bzw. gebogen bzw. kurvenförmig, nicht jedoch eckig. Hierdurch ist es besonders vorteilhafterweise möglich, dass, unabhängig von der axialen Position von Bremstrommel und Reibbelag zueinander, die Reibfläche mit einer Kontaktfläche der Bremstrommel vollflächig kontaktieren bzw. vollflächig in Kontakt gebracht werden kann.

Zweckmäßigerweise ist die Reibfläche konvex ausgebildet.

Vorzugsweise ist der Krümmungsradius der Reibfläche entlang der Radialebene größer als entlang der Schwenkebene. Die Schwenkebene steht senkrecht zur Rotationsachse der Trommelbremse und somit parallel zu einem Radius der Rotationsachse. Infolgedessen bildet die Reibfläche somit in einer speziellen Ausführungsform die Konfiguration der Mantelfläche einer Tonne aus.

Vorteilhafterweise liegt das Verhältnis des Krümmungsradius der Reibfläche entlang der Schwenkebene zum Krümmungsradius der Reibfläche entlang der Radialebene zwischen 0,01 bis 0,08, vorzugsweise zwischen 0,02 bis 0,06. Insbesondere durch ein Verhältnis zwischen 0,02 bis 0,06 wird eine optimale Verlagerbarkeit zwischen Reibbelag und Bremstrommel bei optimaler Kraftübertragung während des Bremsens ermöglicht.

Zweckmäßigerweise ist der Krümmungsradius der Reibfläche entlang der Radialebene und/oder entlang der Schwenkebene konstant. In anderen Worten weist somit die Schnittlinie bzw. -kurve der Reibfläche mit einer Radialebene, auf welcher die Rotationsachse liegt, und/oder der Schwenkebene, die senkrecht zur Rotationsachse steht, einen konstanten Krümmungsradius auf, so dass diese Schnittllinie im wesentlichen kreisbogenförmig ist. Insbesondere durch einen konstanten Krümmungsradius entlang bzw. in der Radialebene wird eine besonders gleichmäßige Winkelversatzkompensation des Reibbelags gewährleistet.

Es versteht sich, dass die weiteren Vorteile und Merkmale der erfindungsgemäßen Trommelbremse, insbesondere wie sie in Zusammenhang mit der Bremsbacke beschrieben sind, in der erfindungsgemäßen Bremsbacke Anwendung finden können.

Weitere Vorteile und Merkmale der vorliegenden Erfindung ergeben sich aus der nachfolgenden Beschreibung von bevorzugten Ausführungsformen mit Bezug auf die beigefügten Figuren. Es zeigen:
- Figur 1: zwei Querschnittsansichten einer bevorzugten Ausführungsform der erfindungsgemäßen Trommelbremse in zwei Zuständen;
- Figur 2: Querschnittsansichten einer weiteren bevorzugten Ausführungsform der erfindungsgemäßen Trommelbremse;
- Figur 3: Querschnittsansichten einer weiteren bevorzugten Ausführungsform der erfindungsgemäßen Trommelbremse.

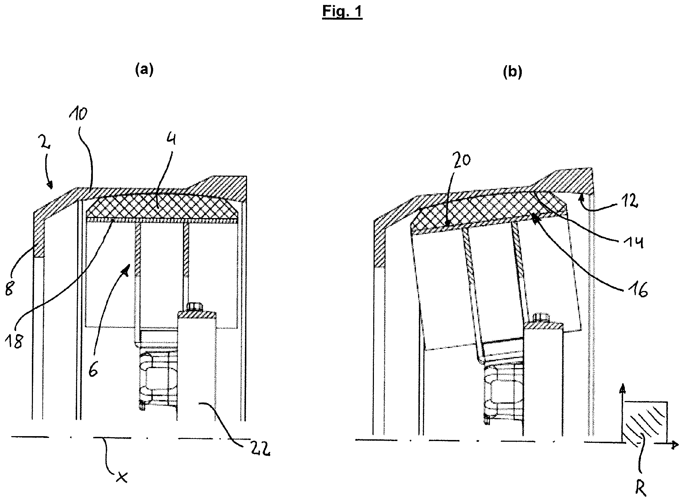

In Figur 1 sind zwei Querschnittsansichten in der Radialebene einer ersten, bevorzugten Ausführungsform der erfindungsgemäßen Trommelbremse dargestellt. Die Figur 1(a) zeigt hierbei die Trommelbremse im kalten Zustand, die Figur 1(b) zeigt die Trommelbremse bei Wärmeausdehnung, d.h. im betätigten Zustand. Die Trommelbremse umfasst eine Bremstrommel 2, einen Reibbelag 4 sowie eine Bremsbacke 6.

Die Bremstrommel weist einen Anbindungsbereich 8 zur Anordnung der Bremstrommel 2 an einem Fahrzeugteil, wie einem Achselement oder einer Radnabe auf. Der Anbindungsbereich erstreckt sich hierbei zweckmäßigerweise in radialer Richtung, zumindest jedoch mit einer Komponente in radialer Richtung. Anschließend an den Anbindungsbereich 8 weist die Bremstrommel 2 einen Mantelbereich 10 auf, der im wesentlichen die Form eines Hohlzylinders ausbildet. An seinem Innenumfang weist der Mantelbereich 10 eine erste Kontaktfläche 12 auf.

Der Reibbelag 4 weist eine zum Mantelbereich 10, insbesondere der ersten Kontaktfläche 12 hingewandte zweite Kontaktfläche 14 auf. Der zweiten Kontaktfläche 14 gegenüberliegend weist der Reibbelag 4 eine Verbindungsfläche 16 auf, über welche der Reibbelag 4 an der Bremsbacke 6 angeordnet bzw. festgelegt ist. Hierfür weist die Bremsbacke 6 einen Belagträger 18 mit einer nach außen gerichteten Anordnungsfläche 20 auf. Die Bremsbacke ist 6 ist an einem Bremsträger 22 schwenk- bzw. drehbar zur Rotationsachse x gelagert.

Um eine Verlagerung in axialer Richtung, d.h. parallel zur Rotationsachse x, zwischen Reibbelag 4 und Mantelbereich 10 zu ermöglichen, sind die erste Kontaktfläche 12 und zweite Kontaktfläche 14 entlang bzw. in einer Radialebene R gekrümmt ausgebildet. Hierfür weist die erste Kontaktfläche 12 zweckmäßigerweise einen ersten Krümmungsradius r₁ auf und die zweite Kontaktfläche 14 einen zweiten Krümmungsradius r₂ auf. Vorteilhafterweise sind der erste Krümmungsradius r₁ und der zweite Krümmungsradius r₂ entlang bzw. in der Radialebene R größer als entlang bzw. in der Schwenkebene S. In anderen Worten bilden die erste Kontaktfläche 12 und die zweite Kontaktfläche 14 somit zweckmäßigerweise die Oberflächenform einer Mantelfläche einer Tonne aus.

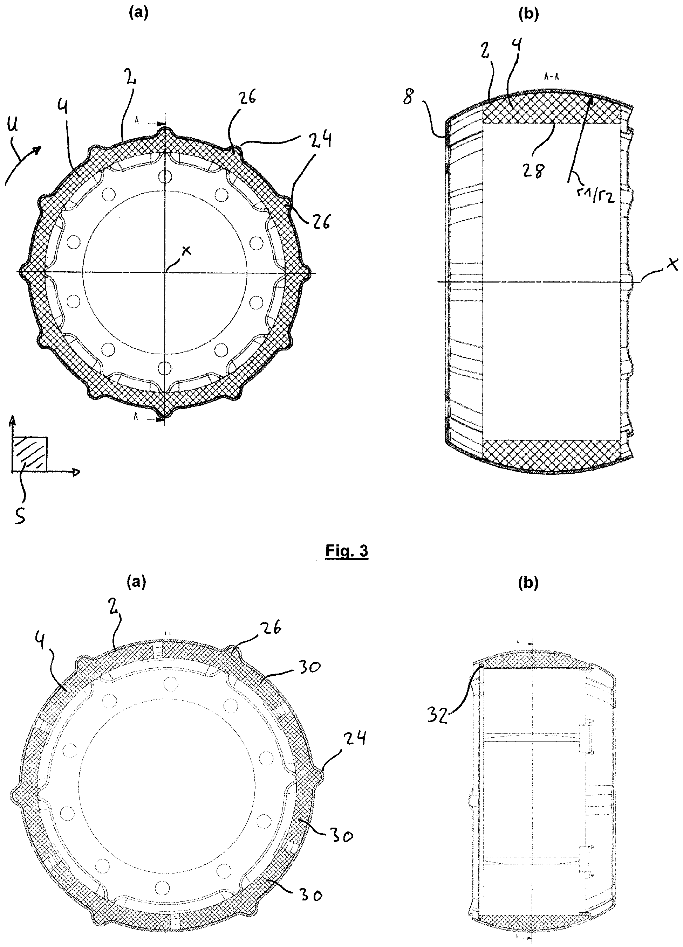

In Figur 2 ist eine zweite, bevorzugte Ausführungsform der erfindungsgemäßen Trommelbremse dargestellt, wobei die Figur 2(a) einen Querschnitt in der Schwenkebene S und die Figur 2(b) einen Querschnitt in der Radialebene R darstellt. In der dargestellten Ausführungsform ist ebenfalls eine Bremstrommel 2 vorgesehen, an der ein Reibbelag 4 angeordnet ist. Dieser ist jedoch nicht an einer Bremsbacke festgelegt, sondern steht derart mit der Bremstrommel 2 in Eingriff, dass eine Verlagerung des Reibbelags 4 zum Mantelbereich 10 in Umfangsrichtung U verhindert wird. Hierfür ist an der ersten Kontaktfläche 12 ein erster Eingriffsbereich 24 und an der zweiten Kontaktfläche 14 des Reibbelags 4 ein zweiter Eingriffsbereich 26 vorgesehen. In der dargestellten Ausführungsform ist der zweite Eingriffsbereich 26 als radial vorspringender, sich axial erstreckender Vorsprung ausgebildet, der in einen, vorzugsweise kongruent, als Rücksprung ausgebildeten ersten Eingriffsbereich 24 eingreift. In einer alternativen Ausgestaltung können beide Eingriffsbereiche 24, 26 auch als Rücksprünge ausgebildet sein, zwischen welchen ein separates Eingriffsmittel wirkt.

Anders als bei der in Figur 1 dargestellten Ausführungsformen, bei welchen Kontaktfläche 12 und die zweite Kontaktfläche 14 als Reibfläche und somit als Reibpaarung ausgebildet sind, ist bei der in Figur 2 dargestellten Ausführungsform eine Reibfläche 28 vorgesehen, die der zweiten Kontaktfläche 14 gegenüberliegend ist.

In Figur 3 ist eine weitere bevorzugte Ausführungsform der erfindungsgemäßen Trommelbremse dargestellt. Figur 3(a) zeigt die Trommelbremse in einer Querschnittsansicht in der Schwenkebene S und Figur 3(b) zeigt die Trommelbremse in einer Querschnittsansicht in Radialebene R. Im Unterschied zu der in Figur 2 dargestellten Ausführungsform ist der Reibbelag 4 nicht als umfänglich geschlossener Ring ausgebildet, sondern durch eine Vielzahl von Ringsegmenten 30 konstituiert. Um die Ringsegmente 30 gegen die erste Kontaktfläche 12 des Mantelbereichs 10 zu drücken bzw. zwingen ist eine Spanneinrichtung 32 vorgesehen. Die Spanneinrichtung 32 kann beispielsweise als sich in Umfangsrichtung U erstreckender Ring ausgebildet sein, der, in Axialrichtung gesehen, an einem umfänglichen Randbereich des Reibbelags, bzw. der Ringsegmente 30 angeordnet ist.

### Bezugszeichenliste

- 2: Bremstrommeln
- 4: Reibbelag
- 6: Bremsbacke
- 8: Anbindungsbereich
- 10: Mantelbereich
- 12: Erste Kontaktfläche
- 14: Zweite Kontaktfläche
- 16: Verbindungsfläche
- 18: Belagträger
- 20: Anordnungsfläche
- 22: Bremsträger
- 24: Erster Eingriffsbereich
- 26: Zweiter Eingriffsbereich
- 28: Reibfläche
- 30: Ringsegment
- 32: Spanneinrichtung
- R: Radialebene
- U: Umfangsrichtung
- S: Schwenkebene
- X: Rotationsachse
- r₁, r₂: Krümmungsradien

## Patentansprüche

1. Trommelbremse, insbesondere für Nutzfahrzeuge, umfassend eine Bremstrommel (2) mit einem Anbindungsbereich (8) zur Anordnung der Bremstrommel (2) an einem Fahrzeugteil, wie einer Radnabe, und einem Mantelbereich (10) mit einer ersten Kontaktfläche (12), und
einen Reibbelag (4) mit einer zum Mantelbereich (10) hin gewandten zweiten Kontaktfläche (14),
wobei die erste und zweite Kontaktfläche (12, 14) entlang bzw. in einer Radialebene (R) gekrümmt sind,
wobei der Reibbelag (4) und der Mantelbereich (10) derart zueinander axial verlagerbar sind, dass die Verlagerung zumindest mit einer Komponente in Axialrichtung (X) erfolgt, **dadurch gekennzeichnet, dass** die Krümmungsradien (r1, r2) der ersten und zweiten Kontaktflächen (12, 14) entlang der Radialebene (R) größer als entlang der Schwenkebene (S) sind.

2. Trommelbremse nach Anspruch 1, wobei eine der Kontaktflächen (12, 14) konkav und die andere der Kontaktflächen (14, 12) konvex ausgebildet sind.

3. Trommelbremse nach Anspruch 1 oder 2, wobei das Verhältnis der Krümmungsradien (r₁, r₂) der ersten und/oder zweiten Kontaktflächen (12, 14) entlang der Schwenkebene (S) zu deren Krümmungsradien (r₁, r₂) entlang der Radialebene (R) zwischen 0,01 bis 0,08, vorzugsweise zwischen 0,02 bis 0,06 liegt.

4. Trommelbremse nach einem der vorhergehenden Ansprüche, wobei der Reibbelag (4) derart mit der Bremstrommel (2) in Eingriff steht, dass eine Verlagerung des Reibbelags (4) zum Mantelbereich (10) in Umfangsrichtung (U) verhindert ist.

5. Trommelbremse nach Anspruch 4, wobei an der ersten Kontaktfläche (12) des Mantelbereichs (10) ein erster Eingriffsbereich (24) und an der zweiten Kontaktfläche (14) des Reibbelags (4) ein zweiter Eingriffsbereich (26) vorgesehen ist, und wobei vorzugsweise einer der Eingriffsbereiche (24, 26) als Rücksprung und der andere der Eingriffsbereiche (26, 24) als Vorsprung ausgebildet ist.

6. Trommelbremse nach einem der vorhergehenden Ansprüche, wobei der Reibbelag (4) als Ringsegment (30) ausgebildet ist.

7. Trommelbremse nach einem der vorhergehenden Ansprüche, wobei eine Spanneinrichtung (32) vorgesehen ist, welche ausgelegt ist, den als Ringsegment (30) ausgebildeten Reibbelag (4), vorzugsweise eine Vielzahl von Ringsegmenten (30), gegen die erste Kontaktfläche (12) des Mantelbereichs (10) zu drücken.

8. Trommelbremse nach einem der vorhergehenden Ansprüche, wobei eine der zweiten Kontaktfläche (14) gegenüberliegende Fläche des Reibbelags (4) als Reibfläche (28) ausgebildet ist.

9. Trommelbremse nach einem der Ansprüche 1 - 4, weiterhin aufweisend eine zu der Bremstrommel (2) verlagerbare Bremsbacke (6), wobei der Reibbelag (4) über eine Verbindungsfläche (16) an einer Anordnungsfläche (20) eines Belagträgers (18) der Bremsbacke (6) festgelegt oder festlegbar ist.

10. Trommelbremse nach Anspruch 9, wobei die erste Kontaktfläche (12) als Reibfläche des Mantelbereichs (10) und die zweite Kontaktfläche (14) als Reibfläche des Reibbelags (4) ausgebildet sind.

11. Bremsbacke einer Trommelbremse, insbesondere für Nutzfahrzeuge, umfassend
einen Belagträger (18) mit einer Anordnungsfläche (20), die entlang bzw. in einer Schwenkebene (S) um eine Rotationsachse (X) der Trommelbremse gekrümmt ist, und
einen Reibbelag (4), der an der Anordnungsfläche (20) angeordnet oder anordenbar ist,
wobei der Reibbelag (4) eine der Anordnungsfläche (20) gegenüberliegende Reibfläche aufweist, die entlang bzw. in einer Radialebene (R) gekrümmt ist, und
**dadurch gekennzeichnet, dass** der Krümmungsradius der Reibfläche entlang der Radialebene (R) größer als entlang der Schwenkebene (S) ist.

12. Bremsbacke nach Anspruch 11, wobei die Reibfläche konvex ausgebildet ist.

## Claims

1. A drum brake, in particular for commercial vehicles, comprising
a brake drum (2) with an attaching region (8) for arranging the brake drum (2) on a vehicle part, such as a wheel hub, and a shell region (10) with a first contact face (12), and
a friction lining (4) with a second contact face (14) which faces toward the shell region (10),
the first and second contact face (12, 14) being curved along or in a radial plane (R), wherein the friction lining (4) and the shell region (10) are displaceable axially (X) with respect to one another, in such a way that the movement has at least one component in axial direction (X), **characterized in that**,
the curvature radii (r₁, r₂) of the first and second contact faces (12, 14) along the radial plane (R) being greater than along the pivoting plane (S)

2. The drum brake as claimed in either of the preceding claims, wherein one of the contact faces (12, 14) being of concave configuration and the other of the contact faces (14, 12) being of convex configuration.

3. The drum brake as claimed in claim 1 or 2, wherein the ratio of the curvature radii (r₁, r₂) of the first and/or second contact faces (12, 14) along the pivoting plane (S) to the curvature radii (r₁, r₂) thereof along the radial plane (R) lying between 0.01 and 0.08, preferably between 0.02 and 0.06.

4. The drum brake as claimed in one of the preceding claims, wherein the friction lining (4) being in engagement with the brake drum (2) in such a way that a movement of the friction lining (4) with respect to the shell region (10) in the circumferential direction (U) is prevented.

5. The drum brake as claimed in claim 4, wherein a first engagement region (24) being provided on the first contact face (12) of the shell region (10), and a second engagement region (26) being provided on the second contact face (14) of the friction lining (4), and wherein preferably one of the engagement regions (24, 26) being configured as a recess and the other of the engagement regions (26, 24) being configured as a projection.

6. The drum brake as claimed in one of the preceding claims, wherein the friction lining (4) being configured as a ring segment (30).

7. The drum brake as claimed in one of the preceding claims, wherein an application device (32) being provided which is designed to press the friction lining (4) which is configured as a ring segment (30), preferably a multiplicity of ring segments (30), against the first contact face (12) of the shell region (10).

8. The drum brake as claimed in one of the preceding claims, wherein a face of the friction lining (4) which lies opposite the second contact face (14) being configured as a friction face (28).

9. The drum brake as claimed in one of claims 1 to 4, having, furthermore, a brake shoe (6) which can be moved with respect to the brake drum (2), wherein the friction lining (4) being fixed or being capable of being fixed on an arrangement face (20) of a lining carrier (18) of the brake shoe (6) via a connecting face (16).

10. The drum brake as claimed in claim 9, wherein the first contact face (12) being configured as a friction face of the shell region (10) and the second contact face (14) being configured as a friction face of the friction lining (4).

11. A brake shoe of a drum brake, in particular for commercial vehicles, comprising
a lining carrier (18) with an arrangement face (20) which is curved along or in a pivoting plane (S) about a rotational axis (X) of the drum brake, and
a friction lining (4) which is arranged or can be arranged on the arrangement face (20),
the friction lining (4) having a friction face which lies opposite the arrangement face (20) and is curved along or in a radial plane (R),
**characterized in that**, the curvature radius of the friction face along the radial plane (R) being greater than along the pivoting plane (S).

12. The brake shoe as claimed in claim 11, the friction face being of convex configuration.

## Revendications

1. Frein à tambour, en particulier frein à tambour pour véhicules utilitaires, comportant
un tambour de frein (2) pourvu d'une zone de liaison (8) pour agencer le tambour de frein (2) sur une partie du véhicule, telle qu'un moyeu de roue, et
une zone enveloppe (10) pourvue d'une première surface de contact (12), et
une garniture de friction (4) pourvue d'une seconde surface de contact (14) tournée vers la zone enveloppe (10),
dans lequel
la première et la seconde surface de contact (12, 14) sont incurvées le long ou dans un plan radial (R),
la garniture de friction (4) et la zone enveloppe (10) sont mobiles axialement l'une par rapport à l'autre de telle sorte que le déplacement s'effectue au moins avec une composante en direction axiale (X),
**caractérisé en ce que**
les rayons de courbure (r₁, r₂) de la première et de la seconde surface de contact (12, 14) le long du plan radial (R) sont supérieurs à ceux le long du plan de basculement (S).

2. Frein à tambour selon la revendication 1,
dans lequel
l'une des surfaces de contact (12, 14) est réalisée concave et l'autre des surfaces de contact (14, 12) est réalisée convexe.

3. Frein à tambour selon la revendication 1 ou 2,
dans lequel
le rapport des rayons de courbure (r₁, r₂) de la première et/ou de la seconde surface de contact (12, 14) le long du plan de basculement (S) sur les rayons de courbure (r₁, r₂) le long du plan radial (R) est compris entre 0,01 à 0,08, de préférence entre 0,02 à 0,06.

4. Frein à tambour selon l'une des revendications précédentes,
dans lequel
la garniture de friction (4) est en engagement avec le tambour de frein (2) de telle sorte qu'un déplacement de la garniture de friction (4) vers la zone enveloppe (10) en direction périphérique (U) est empêché.

5. Frein à tambour selon la revendication 4,
dans lequel
une première zone d'engagement (24) est prévue sur la première surface de contact (12) de la zone enveloppe (10), et une seconde zone d'engagement (26) est prévue sur la seconde surface de contact (14) de la garniture de friction (4), et
de préférence l'une des zones d'engagement (24, 26) est réalisée sous forme de retrait et l'autre des zones d'engagement (26, 24) est réalisée sous forme de saillie.

6. Frein à tambour selon l'une des revendications précédentes,
dans lequel
la garniture de friction (4) est réalisée sous forme de segment d'anneau (30).

7. Frein à tambour selon l'une des revendications précédentes,
dans lequel
il est prévu un moyen de serrage (32) qui est conçu pour presser la garniture de friction (4), réalisée sous forme de segment d'anneau (30), de préférence sous la forme d'une multitude de segments d'anneau (30), contre la première surface de contact (12) de la zone enveloppe (10).

8. Frein à tambour selon l'une des revendications précédentes,
dans lequel
une surface de la garniture de friction (4) opposée à la seconde surface de contact (14) est réalisée sous forme de surface de friction (28).

9. Frein à tambour selon l'une des revendications 1 à 4,
comportant en outre une mâchoire de frein (6) mobile par rapport au tambour de frein (2), la garniture de friction (4) étant immobilisée ou susceptible d'être immobilisée sur une surface de montage (20) d'un support de garniture (18) de la mâchoire de frein (6) par l'intermédiaire d'une surface de liaison (16).

10. Frein à tambour selon la revendication 9,
dans lequel
la première surface de contact (12) est réalisée sous forme de surface de friction de la zone enveloppe (10), et la seconde surface de contact (14) est réalisée sous forme de surface de friction de la garniture de friction (4).

11. Mâchoire de frein d'un frein à tambour, en particulier pour des véhicules utilitaires, comportant
un support de garniture (18) pourvu d'une surface de montage (20) qui est incurvée le long ou dans un plan de basculement (S) autour d'un axe de rotation (X) du frein à tambour, et
une garniture de friction (4) qui est montée ou susceptible d'être montée sur la surface de montage (20),
la garniture de friction (4) présentant une surface de friction qui est opposée à la surface de montage (20) et qui est incurvée le long ou dans un plan radial (R),
**caractérisée en ce que**
le rayon de courbure de la surface de friction le long du plan radial (R) est supérieur à celui le long du plan de basculement (S).

12. Mâchoire de frein selon la revendication 11, dans laquelle la surface de friction est réalisée convexe.
